# EUROPEAN PATENT APPLICATION

(11) **EP 2 708 121 A1**
(43) Date of publication of application: **19.03.2014**
(21) Application number: 13004343.3
(22) Date of filing: 04.09.2013
(51) Int. Cl.: A01M 1/02, A01M 1/06

(54) **WI-FI enabled insect trapping apparatus**

(30) Priority: 14.09.2012 US 201213618454
(71) Applicant: WOODSTREAM CORPORATION, Lititz, PA 17543 (US)
(72) Inventor: Roulston, Gary, Lititz, PA 17543 (US); Eyer, Richard L., Lititz, PA 17543 (US); Beck, Andrew, Ringoes, New Jersey 08551 (US)
(74) Representative: Thoma, Michael

(57) **Abstract**

A Wi-Fi enabled flying insect trapping device (10) is provided that is able to wirelessly communicate information to, and receive commands and inquiries from, a remote device (240).

## Description

### BACKGROUND OF THE INVENTION

### Field of the Invention

The present invention is related to the field of insect trapping devices and, more particularly, to an insect trapping apparatus having a Wi-Fi module for enabling operating parameters of the trapping apparatus to be remotely monitored and controlled.

### Description of the Related Art

Flying insect trapping devices include traps having combustion capability for generating carbon dioxide to attract insects, such as mosquitos, toward and into the trap. One such trap is described in U.S. Patent No. 6,145,243 ("the '243 patent"), which is commonly owned by the assignee of the present invention. The '243 patent is hereby expressly incorporated by reference as if fully set forth herein.

Existing flying insect traps, such as that described in the '005 patent, operate as stand-alone devices. In order for the trap user to be aware of how the trap is performing, or what operational issues may exist, the trap user must come into direct visual and/or physical contact with the trap. This direct contact can subject the trap user to greater risk of being bitten by mosquitos that are near the trap. It is also inconvenient or impossible when the trap user is at another location. Therefore, it would be desirable to provide a trap with remote monitoring capability.

Wi-Fi modules are currently available that allow electronic devices to exchange data wirelessly (using radio waves) over a computer network, including high-speed Internet connections. A device that can use Wi-Fi (such as a personal computer, smartphone, tablet, or digital audio player) can connect to an existing router-based network via a wireless network access point, such as in a trap user's residence. The wireless network access point can also be used to gain access to network resources such as the Internet.

### SUMMARY OF THE INVENTION

Accordingly, the present invention is directed to a flying insect trapping device that can be monitored and controlled remotely using a Wi-Fi module incorporated within the device and the trap user's existing router-based network, allowing the trap user to remain apprised of the trap's current status and any operational issues without having to be physically near the trap. The flying insect trapping device attracts insects by emitting exhaust gas at a temperature and carbon dioxide level representative of air being exhaled by a target person or animal. This exhaust gas is produced using a combustion chamber powered by propane such as that disclosed in the '005 patent. The Wi-Fi module with appropriate trap operating software enables the trap's performance and operational issues to be monitored remotely.

With an appropriate Wi-Fi module, the trap may be configured in ad hoc networking mode in which the trap communicates directly with a "smart" monitoring device such as a PC or an iPhone, without first going through a wireless router and the Internet. Smart phones and other devices able to communicate with one another directly, known to those in the art as Wi-Fi Direct devices, are able to communicate with each other without requiring an external wireless access point. When a device comes within the range of the Wi-Fi Direct host, the device can connect to the host using an existing ad-hoc protocol as is known to persons skilled in the art.

In the ad hoc networking mode, the Wi-Fi module in the trap creates its own web server with an IP address with which a smart device is able to communicate. In ad hoc or "device-to-device" mode, communication between the trap and the smart monitoring device depends upon proximity between the trap and the monitoring device, and is typically limited to distances of about 250 feet. Therefore, while the monitoring device is spaced away from the trap, the monitoring is not truly "remote" in the manner that is possible when the trap connects to the Internet via the local wireless router-based network.

For truly remote monitoring, the Wi-Fi module is configured to connect the trap directly to an existing wireless router-based network, or through an external wireless access point in order to broadcast information pertaining to the trap to a remote device. Typically, the local network is also connected to the Internet via a modem and a wireless router. While outgoing requests for data are transmitted without impediment, requests from an Internet server to the local network are usually blocked by a firewall or other protective mechanism. This is problematic because, for truly remote monitoring, the trap user, also referred to herein as a "client" with respect to the Internet, needs to be able to request trap status information through the trap user's local area network from an outside server via the Internet.

To solve this problem, the present invention includes connecting the trap, as part of the trap user's local area network, to the Internet via a data proxy server (DPS). A DPS acts as an intermediary for requests from clients seeking resources from other servers. Requests or queries from one client, such as the trap user using a PC with an Internet browser, are received by the DPS and cached until the DPS receives a request or query from another client, such as the trap, asking whether any requests are pending. The DPS then forwards the cached request from the trap user to the trap in response to the trap's request. Similarly, a query from the trap is not forwarded to the trap user until the trap user sends a query to the DPS inquiring as to whether any updates are available. Hence, both the trap and the Internet browser on the trap user's remote computing device act as clients of the DPS.

For normal operations, the DPS does not issue any requests but only receives and caches requests from both the trap and the trap user's remote computing device. These requests are forwarded to the other party only upon receipt of an inquiry from the other party. Therefore, the trap user has only to log onto the DPS over the Internet, using a personal computing device and a security enabled personal account, to request trap status information from the trap using the web browser on the user's personal computing device. The trap user can also send operating commands to the trap through the DPS. The DPS will forward these requests and/or commands to the trap when the trap sends an inquiry as to whether the DPS has any cached information.

In view of the foregoing, one object of the present invention is to provide an insect trapping device able to communicate data relating to the performance and operational parameters of the trapping device to a remote device either directly in an ad hoc networking mode or through connection to an existing, router-based, wireless network.

Another object of the present invention is to provide an insect trapping device in accordance with the preceding object in which the trap connects to a local wireless router-based network and communication between the trap and the trap user is provided via the Internet, enabling true remote monitoring of the trap.

Yet another object of the present invention is to provide an insect trapping device in accordance with the preceding objects in which remote access over the Internet to the trap user's local network is safely provided via a data proxy server that serves as an intermediary for requests being sent from and to the local network from another server.

A further object of the present invention is to provide an insect trapping device in accordance with the preceding objects that can be turned off remotely, allowing the trap to cool and cease insect attraction, thereby facilitating trap maintenance without the trap user being bitten by mosquitos near the trap.

Still a further object of the present invention to provide an insect trapping device equipped with a Wi-Fi module that is not complex in structure and which can be implemented at low cost but yet efficiently provides remote trap monitoring capability.

These together with other objects and advantages which will become subsequently apparent reside in the details of construction and operation as more fully hereinafter described and claimed, reference being had to the accompanying drawings forming a part hereof, wherein like numerals refer to like parts throughout.

### BRIEF DESCRIPTION OF THE DRAWINGS

Figure 1 is a perspective view of a Wi-Fi enabled flying insect trapping device in accordance with the present invention.
Figure 2 is a front elevational view of the device shown in Figure 1.
Figure 3 is a perspective view of a top housing of the power head of the device shown in Figure 1.
Figure 4 is a perspective view of the power head of the device of Figure 1 with the top housing removed.
Figure 5 is an exploded view of the components associated with the power head.
Figure 6 is a block diagram of a representative router-based local network to which the insect trapping device with Wi-Fi module has been connected through a wireless access point in accordance with the present invention.
Figure 7 is a table summarizing a listing of possible parameters to be monitored by the trapping device and broadcast to a remote device of the trap user.
Figure 8 is a flow chart of the method of monitoring and transmitting information relating to a trap's operating parameters directly to a smart device in an ad hoc networking mode in accordance with the present invention.
Figure 9 is a flow chart of the method of monitoring and transmitting information relating to a trap's operating parameters to a remote server over the Internet in accordance with the present invention.

### DETAILED DESCRIPTION OF THE PREFERRED EMBODIMENTS

In describing a preferred embodiment of the invention illustrated in the drawings, specific terminology will be resorted to for the sake of clarity. However, the invention is not intended to be limited to the specific terms so selected, and it is to be understood that each specific term includes all technical equivalents which operate in a similar manner to accomplish a similar purpose.

Although only one preferred embodiment of the invention is explained in detail, it is to be understood that the embodiment is given by way of illustration only. It is not intended that the invention be limited in its scope to the details of construction and arrangement of components set forth in the following description or illustrated in the drawings. Also, in describing the preferred embodiments, specific terminology will be resorted to for the sake of clarity. It is to be understood that each specific term includes all technical equivalents which operate in a similar manner to accomplish a similar purpose.

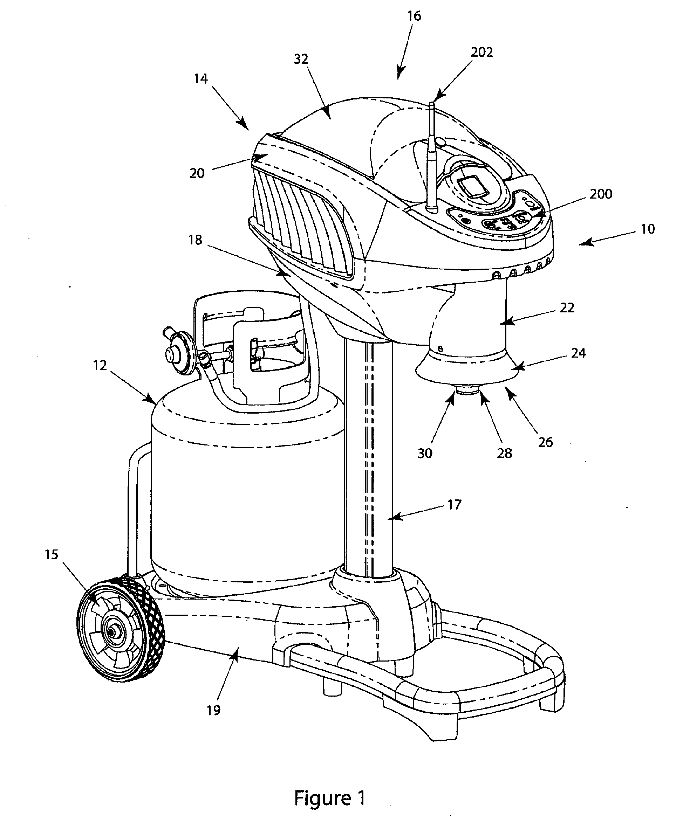

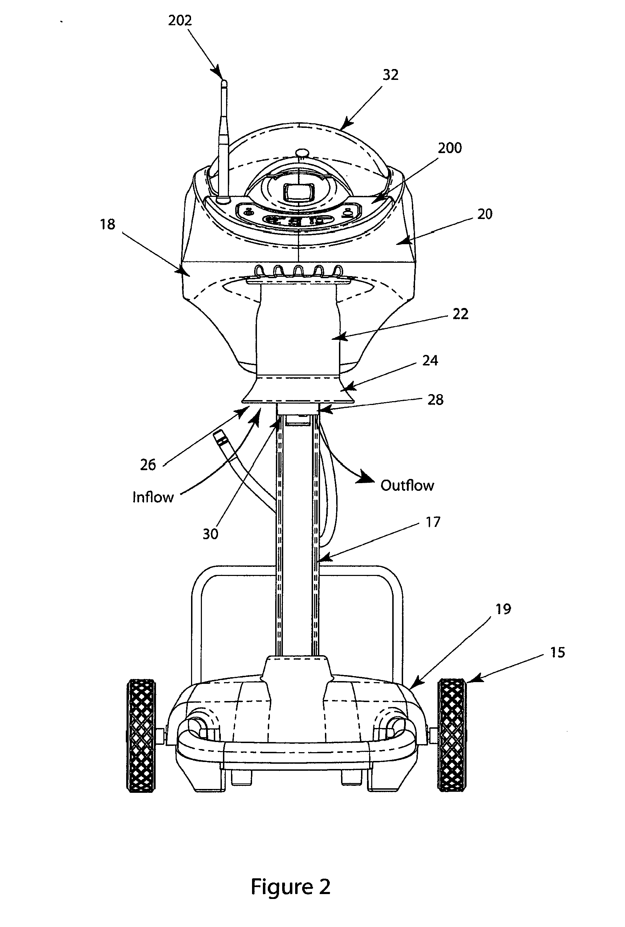

A propane-powered, Wi-Fi enabled insect trapping device in accordance with the present invention is representatively shown in Figures 1 and 2. The device 10 is designed to be used with a supply of combustible fuel, such as a propane tank 12 of the type conventionally used by consumers for supplying fuel to a barbecue grill. Broadly speaking, the general function of the device 10 is to emit an exhaust gas with an appropriate carbon dioxide content in order to attract mosquitoes and other flesh biting insects that are attracted to carbon dioxide. Then, an inflow draws the attracted insects into a trap chamber within the device, whereat the insects are captured and killed by dehydration/starvation.

The device 10 comprises a supporting frame structure, generally indicated at 14. The supporting frame structure 14 includes a power head 16 supported on a post 17. The supporting frame structure may include wheels 15, and may also include a supporting deck 19 for carrying the propane tank 12, so that the tank 12 and device 10 can be transported together as a unit, as is shown in Figure 1.

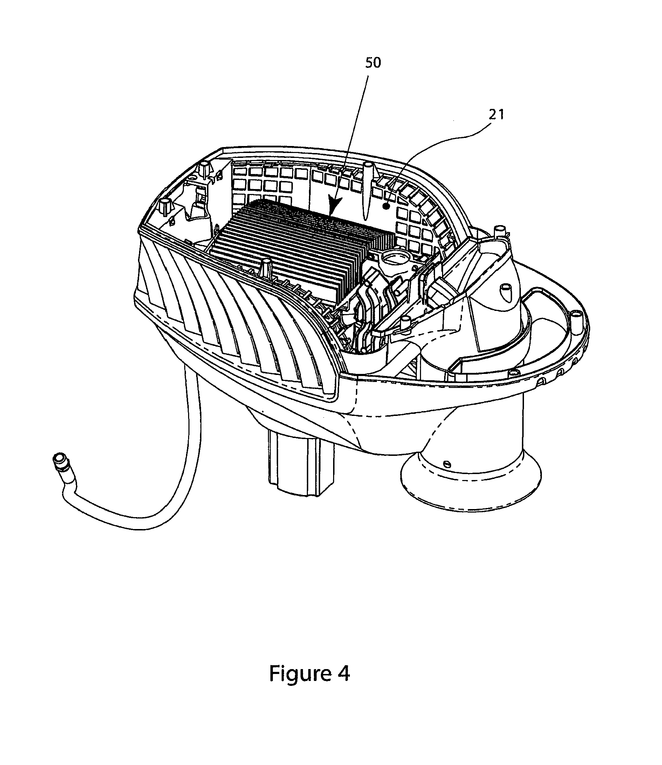

The power head 16 includes a bottom housing 18, a top housing 20, and an inner housing 21 (see Figure 4), all mounted together. The housings 18, 20, and 21 are coupled and secured together using conventional fasteners, adhesives, a snap-fit relation, or in any other suitable manner. In the illustrated embodiment, the housings 18, 20, and 21 are molded from plastic; however, these housings 18, 20 and 21 and the power head 16 in general, may be made from any materials and may take any shape, configuration, or construction.

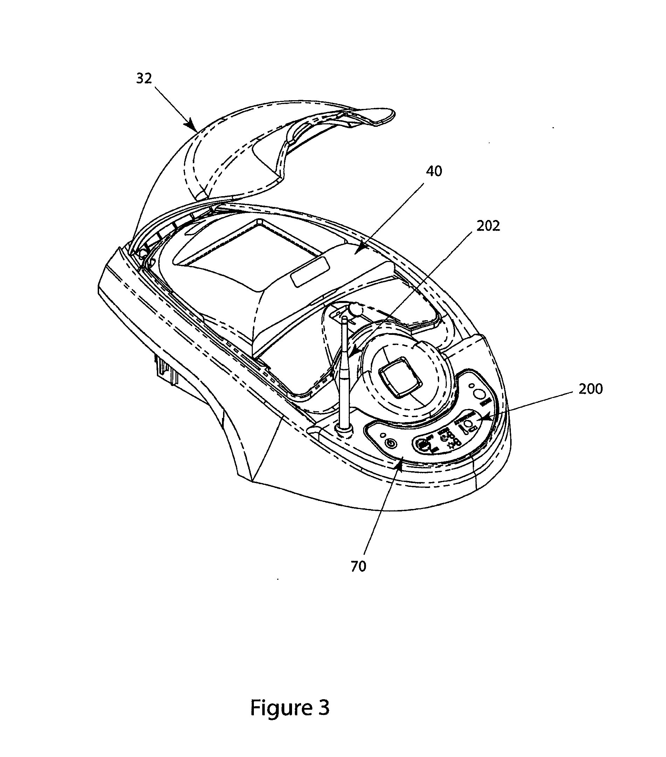

As shown in Figure 3, the power head includes a display 200 enabling the trap user to visually monitor trap performance and operating parameters when desired. The trap is also preferably provided with an external antenna 202 which enables the trap to broadcast trap information to a remote device having Wi-Fi capability. Suitable antennas, such as 2.4 GHz antennas made by SkyWave Antennas, Huntsville, AL, are commercially available and transmit over a desired frequency such as 2.4 GHz.

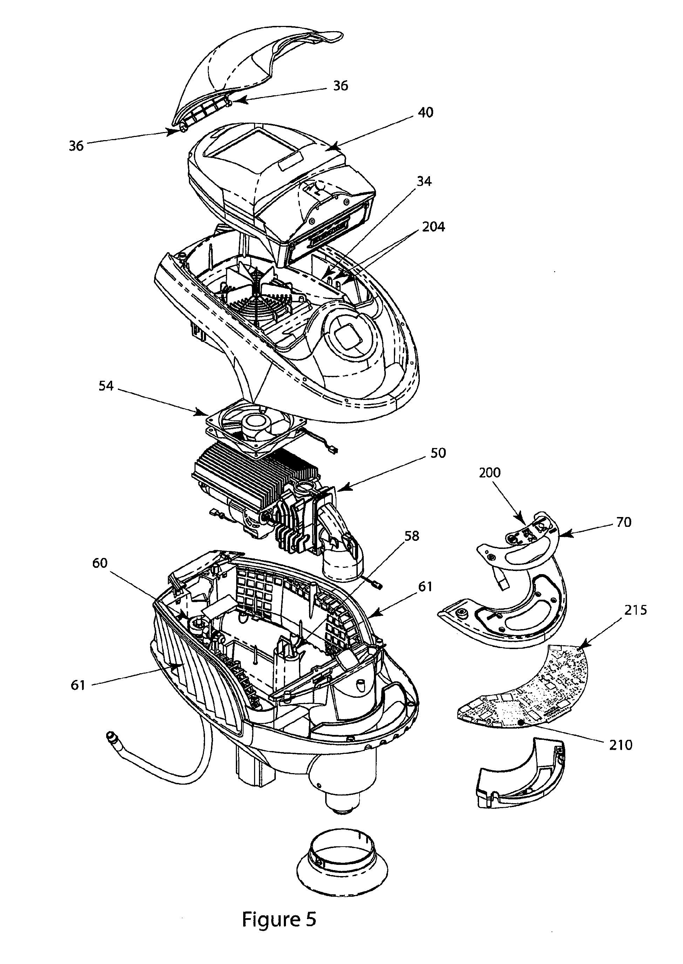

As further shown in Figures 1 and 2, a tubular intake nozzle 22 protrudes downwardly from the bottom housing 18 and is formed integrally therewith. The intake nozzle 22 has a flared lower end 24 which is attached by fasteners or snap-fitting to, and thus forms a part of, the intake nozzle 22. The flared lower end 24 defines an insect inlet 26. As will be appreciated from the details provided herein below, a vacuum device such as an electrically powered fan 54 (see Figure 5) is used to create a vacuum zone which is communicated to the intake nozzle. Insects attracted to the carbon dioxide emanated by the device 10 will fly into the vacuum zone and be drawn into the insect inlet 26 for capture. The intake nozzle 22 and the inlet 26 provided thereby may be carried on the supporting frame structure 14 in any suitable manner and the construction illustrated and described is only an exemplary construction. Thus, other configurations may be used.

Concentrically mounted within the intake nozzle 22 is an outlet nozzle 28 which provides an exhaust outlet 30 on the lower end thereof. The function of the outlet nozzle 28 and its exhaust outlet 30 is to allow a "plume" of exhaust gas including carbon dioxide to flow outwardly and downwardly therefrom. As the downward flow of the exhaust gas reaches the ground, it flows radially outwardly from the device 10 along the ground. Mosquitoes and other insects attracted to carbon dioxide will be able to sense this radiated plume of carbon dioxide and follow the same to its source, namely the exhaust outlet 30. In addition, in some cases it may be desirable to mount a chemical attractant to the trap such that the attractant can mingle with the outflow to increase insect draw.

As can be appreciated from the construction disclosed, because the outlet nozzle 28 is concentric with the intake nozzle 22, when the attracted insects follow the carbon dioxide, either with or without an additional chemical attractant, to its source, i.e., to the outlet 30, they will be immediately adjacent the insect inlet 26. As a result, the attracted insects will fly directly into the vacuum zone created by the vacuum device 54 and communicated to the intake nozzle 22 and its insect inlet 26 whereby they are drawn into the device 10 and captured therein. The respective flows of the vacuum intake and the exhaust gas outflow are indicated by the inflow and outflow arrows in Figure 2. For further details and variations on this aspect of the disclosed construction, reference may be made to the '243 patent, previously incorporated by reference herein.

Side vents 61 on each side of the power head 16 allow exhaust air to escape from the power head 16. The side vents 61 contain screens preferably constructed of a metallic mesh fabric. However, more broadly, any suitable filtering method would be acceptable to ensure that insects cannot enter the power head 16 through the exhaust vents, thereby preventing clogging and contamination of the power head 16. Other components shown in Figure 5 are also described in the '243 patent, previously incorporated herein by reference.

The upper housing 20 of the power head 16 includes an access door 32 that can be moved between open and closed positions to open and close an access opening 34 (see Figure 5) formed in the upper housing wall. The access door 32 and the access opening 34 opened and closed thereby are best illustrated in Figures 1, 2, 3 and 5. The door 32 is pivotally mounted to the upper housing 20 to facilitate its opening and closing movements by inserting pivot pins 36 (see Figure 5) at the back end thereof into openings (not shown) formed in the upper housing 20 adjacent the upper edge of the opening 34. In the broader aspects of the invention, the door 32 may be entirely separable from the power head 16, or may be connected for opening and closing movements using any suitable construction. In fact, the provision of the door 32 is not necessary at all and is simply a feature for convenience. The role of the access door 32 and its associated opening 34 is to enable a user to gain access to the interior of the power head 16.

As shown in Figures 3 and 5, a plastic container 40, the interior of which defines an insect trap chamber, is removably mounted within the power head 16. The chamber defined by the container 40 is communicated to the insect inlet 26 so that the insects drawn in by the vacuum will be deposited in the container 40 where they will become dehydrated and perish. The access door 32 and its associated opening 34 permit access into the interior of the power head 16 to allow the user to access the container 40 as desired for purposes of removal and/or replacement. In the disclosed embodiment, the door 32 is formed from a transparent material to enable the user to visually inspect the container 40 to determine whether it needs to be emptied. Specifically, the transparent material enables the user to visually verify whether the bag 40 is at or near its full capacity of insects. In the broader aspects of the invention, the door 32 need not be transparent, and further, as mentioned previously, the device does not necessarily require the door 32 and its associated opening 34.

Preferably, the container 40 is located proximate to optical sensors 204 (see Figure 5) such as a photocell that is used to detect the level of insects trapped in the container. Two sets of photocells pass a beam of light through the transparent material of the container and, when the beams are broken, the optical sensors provide a signal indicating the container is "nearly full", or "ready to be emptied".

Figure 4 shows a perspective view of the components internal to the power head 16, with the container 40 and the upper housing 20 removed for clarity, and Figure 5 shows an exploded view of these components. These internal components include a combustion/heat exchanger device, generally designated by reference numeral 50, and the electrically powered fan 54. The inner housing 21, the upper housing 20, and the bottom housing 18 include a series of integrally molded ribs 58 which define areas for mounting the combustion/heat exchanger device 50. Further, the bottom housing 18 also includes an opening 60 for allowing a regulator hose 64 to be inserted therein and connected to the combustion/heat exchanger device 50 for purposes of supplying combustible fuel, preferably propane, thereto.

As shown in Figures 3 and 5, a controller 70 is mounted on top of the upper housing 20. The controller 70 includes a printed circuit board (PCB) 215 having a Wi-Fi module 210. The Wi-Fi module 210, which includes a microprocessor and associated firmware (not shown), is commercially available and, according to the present invention, is incorporated in the PCB of the insect trapping device controller 70. The Wi-Fi module 210 preferably has a reception range of up to about 400 feet and low power consumption. Suitable Wi-Fi modules include those marketed by Roving Networks of Los Gatos, CA, such as Model RN-171.

Using the Wi-Fi module 210 and antenna 202, operating software configured for the trapping device makes certain information about the trap's performance and operational parameters available for broadcast, such as on a 2.4 GHz frequency, to a remote device within physical range of the trap. The Wi-Fi module 210 also enables the trap to connect to the trap user's existing wireless router-based network for communication to remote devices over the Internet.

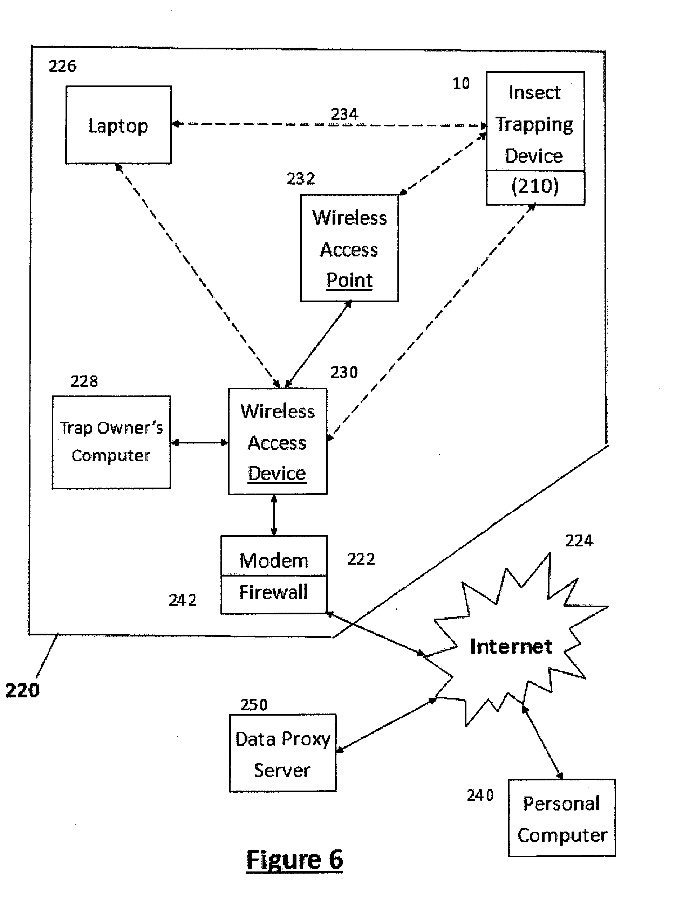

A representative home wireless router-based network 220 including a trap 10 equipped with a WiFi module 210 and a modem 222 for accessing the Internet 224 is shown in Figure 6. A home network 220 typically includes one or more computing devices, such as a laptop 226 and/or portable computer (PC) 228 which communicate with each other via a wireless access device 230. The Wi-Fi enabled insect trap according to the present invention can communicate wirelessly with other devices on the local network 220 through the wireless access point 232 or directly to the wireless access device 230.

As noted above, ad hoc networking is possible by which the insect trapping device 10 communicates directly, as represented by the dotted line 234, with a "smart" mobile device having Wi-Fi Direct capability. Smart devices are known by those skilled in the art to be those electronic devices that are cordless, easily transportable, always connected via WiFi, 3G, 4G etc., and capable of voice and video communication, Internet browsing, and "geo-location" for search purposes.

When using ad hoc networking, the trap user's smart mobile device, in this case the laptop 226, has its own software access point enabling the laptop to pick up the Wi-Fi broadcast directly from the trap 10 without first going through a wireless router and modem of a local network. The module used in the trap also enables the trap to act as the Wi-Fi host. As part of an ad hoc network, the Wi-Fi module 210 in the trap 10, together with the microprocessor and its associated firmware, creates its own web server with its own IP address. Ad hoc accessibility to the Wi-Fi signal broadcast from the trap by the smart mobile device 226 is range limited, however, with an estimated range between the trap 10 and the mobile device 226 of about 250 feet from indoors to outdoors. Nonetheless, ad hoc networking is convenient for the trap user when at home, where the trap user can simply access his or her laptop, iphone or similar smart device to check trap status.

Ad hoc networking can also be seen as bridge communication permitting the trap to become part of the trap user's existing home network 220. Once connected to the home network 220, the trap 10 is enabled to communicate over the Internet 224, using the home network's wireless access device 230 and modem 222, to transmit trap status data to a remote server such as on a remote PC 240.

As briefly described above, home networks are able to access various web sites on the Internet 224 through the modem 222 because the home network firewall 242 does not consider requests from the local network 220 to the Internet 224 to be a threat. The typical firewall 242 will, however, block any incoming data request from the Internet to the local network to ensure the security of the local network.

Accordingly, in order to enable communication between a remote server 240 being used by the trap user and the trap 10 on the user's local network 220, a data proxy server (DPS) 250 is used. The DPS 250 acts as an intermediary for requests from clients seeking resources from other servers such as PC 240. Requests or queries from one client, such as the trap user using the PC 240 with an Internet browser, are received by the DPS 250 and cached until the DPS receives a request or query from another client, such as the trap 10, asking whether any requests are pending. The DPS 250 then forwards the cached request from the trap user to the trap 10 in response to the trap's request. Similarly, a query from the trap is not forwarded to the trap user on PC 240 until the trap user sends a query to the DPS 250 inquiring as to whether any updates are available. Hence, both the trap 10 and the Internet browser on the trap user's remote computing device 240 act as clients of the DPS 250.

For normal operations, the DPS does not issue any requests but only receives and caches requests from both the trap and the trap user's remote computing device. These requests are forwarded to the other party only upon receipt of an inquiry from the other party. Therefore, the trap user has only to log onto the DPS over the Internet, using a personal computing device and a security enabled personal account, to request trap status information from the trap using the web browser on the user's personal computing device. The trap user can also send operating commands to the trap through the DPS. The DPS will forward these requests and/or commands to the trap when the trap sends an inquiry as to whether the DPS has any cached information.

Messages (requests and responses) sent between the DPS and the trap are typically conveyed using an HTTP GET or POST request. The data in the request and response messages can take one of several different forms such as XML, key-value pairs, or comma-delimited values. In the case of both XML and key-value pairs, representation of the data can become quite long and may require considerable resources on the trap to decode it. Since the status data sent to/from the trap is fairly small, formatting this data as comma-delimited values can reduce the packet size as well as the CPU and memory requirements of the trap.

As is known, comma-delimited values present a value for each data element, with values being separated from one another by a comma, and with the data elements in a fixed sequence. For example, if the data elements "temperature", "pressure" and "percent load" are known to be transmitted in this sequential order, the following could represent temperature (100 degrees), pressure (75 psi) and percent load (80%) using comma-delimited values: 100, 75, 80.

To indicate the nature of the message being sent, the message contains a type byte. The type byte is typically a number, arbitrarily assigned, that corresponds to a particular dataset. It may also indicate the status of communications with the trap as will be described hereinafter. In addition to data, the message also typically includes a device identifier such as a serial number, MAC address or other globally unique value for an individual trapping device. The message may also include security data such as a passphrase, checksum or CRC byte to verify a message has been transmitted without error, as would be known by persons of skill in the art.

The Wi-Fi enabled insect trapping device according to the present invention is configured to support messages with type bytes identifying a registration message, status messages, and alarm messages. The registration message is sent by the trap device during initial configuration. Particularly, the trap device sends a message to a registration page on a trap registration and monitoring (TRM) server. The registration message typically includes the trap device MAC address and serial number. The TRM server will return a response to the trap device indicating if the registration was a success or a failure. If the registration was successful, the trap device will enter its normal communication mode. If not, a service code will be displayed on the trap device display.

Status messages are sent to the trap user to indicate the state of the trap. During normal communications, the trap device will send status messages to the DPS periodically. The rate of these messages will depend on whether the trap device is powered on or off, the type of data being sent, etc. Upon receipt of a status message, the DPS will return a response to the trap that will contain any commands pending from the trap user. If no commands are pending, the response sent to the trap device will indicate there are no pending commands.

Commands are sent by the trap user to instruct the trapping device to turn itself off, reset internal counters, and/or set other operational parameters. When the trap user wants an update, or a command needs to be issued to the trap device, the trap user's web page will send a message to the DPS. If the message is a request for status, the DPS will return the last status message received from the trap device. If the message is a command, the DPS will cache the message and pass it to the trap device the next time the trap device contacts the DPS. If the trap device is off-line, the DPS will indicate that in its response to the trap user's web page.

Finally, alarm messages are sent by the trap device to the TRM server to indicate that a condition has occurred of which the trap user should be immediately notified, such as a low fuel indication or a filled bag indication.

Preferably, messages sent from the trap device to the DPS are sent as HTTP post requests with the data in the form of comma-delimited text. All messages from the trap device should start with the MAC address of the trap device, followed by a type byte indicating the type of data in the packet using a particular number. For example, type byte "1" may indicate the data being sent is a registration message, type byte "2" may indicate that the data is a status message, and type byte "3" may indicate that the packet contains data pertaining to an alarm condition. As would be known, the particular numbers assigned to individual data types is an arbitrary assignment, as any set of numbers could be used to represent a set of data types. For security, the message may also include a checksum or other appended information for ensuring that the message has been received without corruption. If the checksum is determined to be incorrect, the DPS will indicate to the trap device if an error occurred while processing the request.

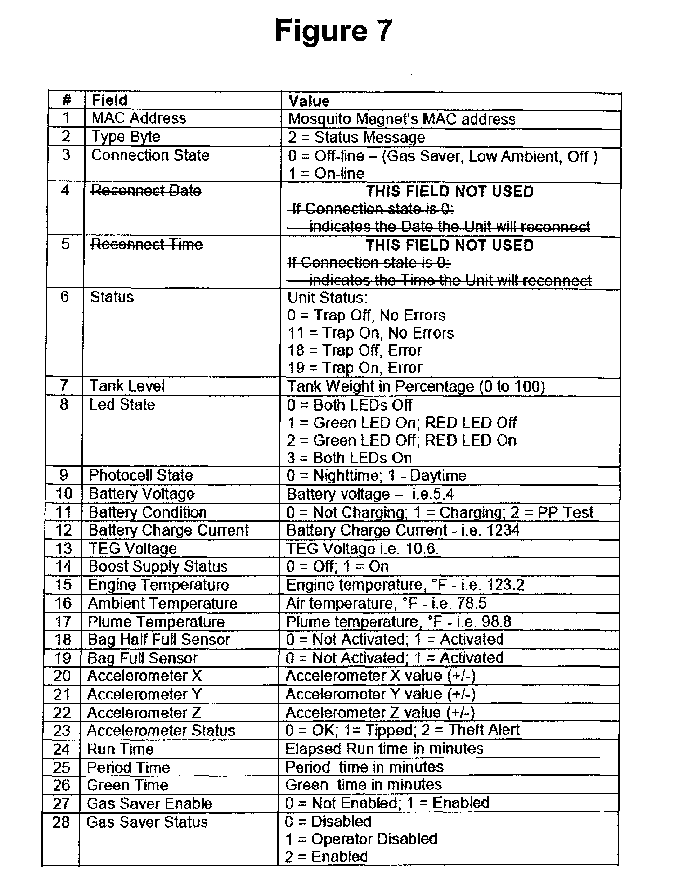

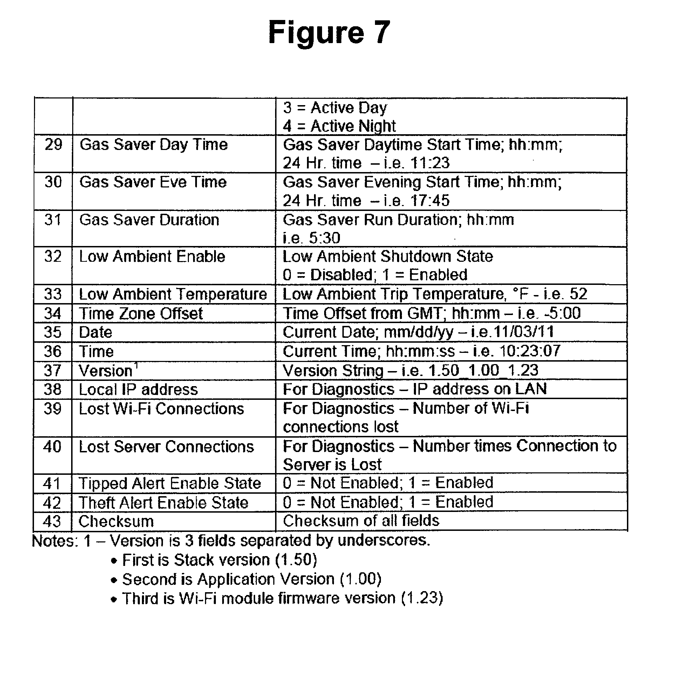

According to a preferred embodiment, the trap is able to communicate a broad range of information including its connection state on the network, fuel tank level, gas saver status, state of status indicators such as LEDs, battery status, engine temperature, ambient temperature, engine temperature, etc. For gas saver status, the trap can be programmed to automatically shut down for up to 4 hours, twice per day, in order to conserve propane. Using the 4 hour shutdown option, a 20 lb. tank of propane that normally lasts for 21 days can last up to 30 days. The temperature parameters are monitored on a real-time, continuous basis, and can be set in either Celsius or Fahrenheit. Timers also run real time to track continuous runtime during a season, elapsed time between tank changes, runtime during a 24 hour period, gas saver mode time measurement and "time to green". "Time to green" is the time required to get from a cold start, indicated by an amber LED illuminated during warm up, to normal engine operating temperature at which point a green LED light is illuminated, indicating that operating temperature has been reached. A representative summary of possible parameters is set forth in Figure 7.

Each parameter to be transmitted from the trap to the remote server is identified by a content field, followed by a value for that content field in comma-delimited format. For example, if content field "16" is used to designate ambient temperature as shown in Figure 7, and the ambient temperature is 70 degrees, then this information would be included in a packet starting with the MAC address (for example, 00:06:66:71:C9:0D), a type byte ("2") indicating that the message is a status message, and the ambient temperature as follows: Message = 00:06:66:71:C9:0D, 2, 16, 70. Using this format, values for a large number of parameters may be sent in a single message.

Benefits of the Wi-Fi enabled insect trapping device further include the ability to transmit a tank change signal indicating the number of days remaining on the current tank of propane, and an attractant signal indicating how much longer a chemical attractant which may have been mounted on the trap is viable. A user-settable timer may be included that records the elapsed time since the attractant was installed. Such a timer is helpful in that the attractant will continue to expire even when the trap is not running.

Through remote communication, the trap device is also able to notify the trap user of any faults which have occurred so that the trap user can take appropriate action. An accelerometer can also be mounted on the trap to detect attempts to tamper with or move the trap. Upon detection of such movement, the trap will send a message indicating that the trap has been moved or knocked over. Electronic shutdown and lockout of the trap with a user settable password may also be included as features of the trap, as well as remote on/off commands. For safety, the remote on command may be disabled, but the capability for such remote control is available.

The trap may further be provided with a security system and/or lock that enables the trap user to secure the trap for residential and commercial purposes. For example, through-holes may be provided in the trap supporting frame that will accept a cable lock like that used in bicycle locks. A lawn anchor device could also be an optional add-on to the trap.

The present invention therefore includes both an apparatus and a method of operating the apparatus for remote monitoring. Remote monitoring can be accomplished on either an ad hoc networking mode or via the Internet.

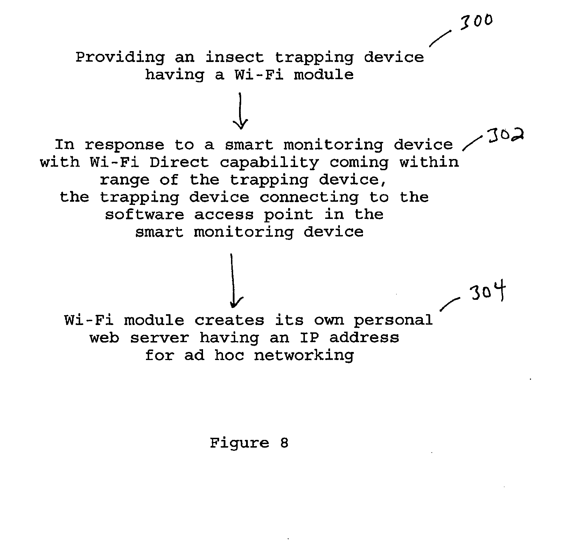

Figure 8 is a flowchart setting forth the method steps for remote monitoring of trap operation in an ad hoc configuration. As summarized in Figure 8, the method begins by providing an insect trapping device having a Wi-Fi module as already described herein, step 300. When a smart monitoring device with Wi-Fi Direct capability comes within range of the trapping device, the trapping device connects to the software access point in the smart monitoring device, step 302. The Wi-Fi module creates its own personal web server having an IP address for the ad hoc networking, step 304.

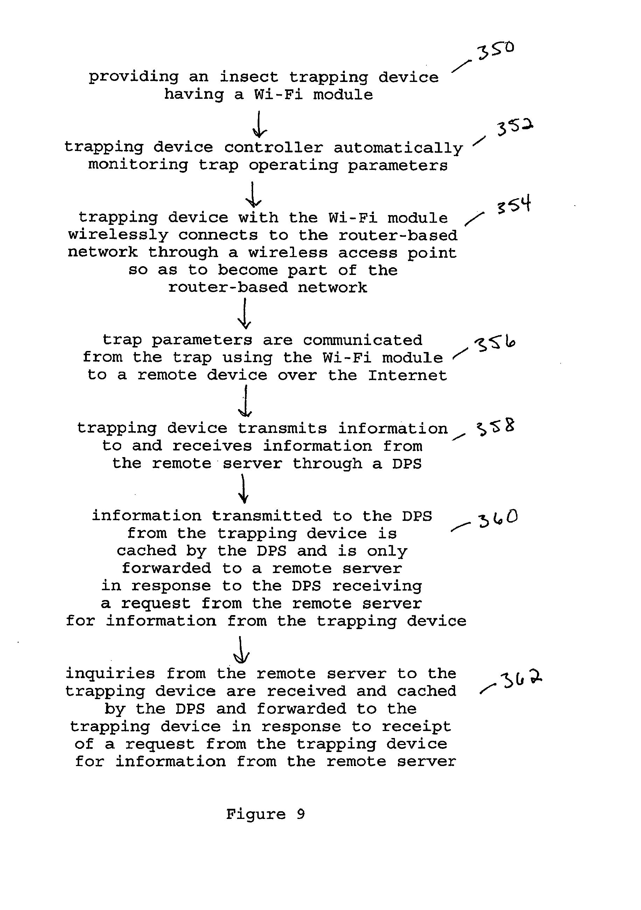

Figure 9 is a flowchart setting forth the method steps for remote monitoring of trap operation over the Internet. As summarized in Figure 9, the method begins by providing an insect trapping device having a Wi-Fi module as already described herein, step 350. The trapping device controller automatically monitors trap operating parameters, step 352. The trapping device with the Wi-Fi module wirelessly connects to the router-based network through a wireless access point so as to become part of the router-based network, step 354. The trap parameters are communicated from the trap using the Wi-Fi module to a remote device over the Internet, step 356.

For security, the trapping device transmits information to and receives information from the remote server through a DPS, step 358. Information transmitted to the DPS from the trapping device is cached by the DPS and is only forwarded to a remote server in response to the DPS receiving a request from the remote server for information from the trapping device, step 360. Similarly, inquiries from the remote server intended for the trapping device are received and cached by the DPS and are only forwarded to the trapping device in response to the DPS receiving a request from the trapping device for information from the remote server, step 362.

The foregoing descriptions and drawings should be considered as illustrative only of the principles of the invention. The invention may be configured in a variety of shapes and sizes and is not limited by the dimensions of the preferred embodiment. Numerous applications of the present invention will readily occur to those skilled in the art. Therefore, it is not desired to limit the invention to the specific examples disclosed or the exact construction and operation shown and described. Rather, all suitable modifications and equivalents may be resorted to, falling within the scope of the invention.

## Claims

1. An insect trapping device comprising a supporting frame, a power head including an insect trap chamber carried on said supporting frame, an insect inlet through which insects gain access to said insect trap chamber, a combustion device carried on said supporting frame and having an inlet port connected to a fuel supply containing combustible fuel and an outlet port, said inlet port enabling fuel from said fuel supply to flow into said combustion chamber for combustion therein to create an exhaust gas containing carbon dioxide, and an exhaust outlet in communication with the outlet port of said combustion device and configured to allow said exhaust gas to flow outwardly from said trapping device so that insects are attracted to the carbon dioxide in said exhaust gas,
**characterized in that,**
the trapping device includes a controller mounted within said power head and configured to monitor and control a plurality of trap operating parameters, said controller being equipped with a Wi-Fi module for wirelessly connecting said trapping device to a remote device.

2. The insect trapping device as set forth in claim 1, wherein said Wi-Fi module is configured for an ad hoc networking mode in which the Wi-Fi module connects to a remote device and transmits to and from said remote device directly on a device-to-device basis.

3. The insect trapping device as set forth in claim 2, wherein said Wi-Fi module creates a personal web server having an IP address when in said ad hoc networking mode.

4. The insect trapping device as set forth in claim 1, wherein said Wi-Fi module is configured to wirelessly connect directly to a wireless router-based network, or through a wireless access point on said network so as to become part of said router-based network.

5. The insect trapping device as set forth in claim 4, wherein said router-based network includes a modem through which said network is connected to the Internet, said trapping device as part of said router-based network being able to communicate over the Internet to a remote server, and preferably said trapping device being configured to transmit information to and receive information from said remote server through a data proxy server.

6. The insect trapping device as set forth in claim 1, wherein said trap includes a timer configured to provide the controller with information on an amount of fuel remaining in the tank, said controller configured to send a tank volume signal to the remote device using the Wi-Fi module, said controller preferably also being configured to transmit an attractant signal to the remote device indicating how much longer an attractant being used with the trap is viable.

7. The insect trapping device as set forth in claim 6, wherein said trap includes a user-settable timer that records an elapsed time since the attractant was installed.

8. The insect trapping device as set forth in claim 1, wherein said device includes an accelerometer mounted on the device to detect attempts to tamper with or move the trap, said controller being configured, upon detection of such movement, to transmit a message indicating that the trap has been moved or knocked over to a remote device.

9. The insect trapping device as set forth in claim 1, wherein said controller is configured to receive a command from a remote device and, in response to said command, to electronically shut down operation of the trap.

10. A method of remotely monitoring and controlling an insect trapping device configured to generate an insect attracting output detectable to insects in a surrounding environment,
**characterized in that,**
the method includes equipping a controller with a Wi-Fi module mounted within said device, monitoring trap operating parameters automatically by said controller, and wirelessly communicating said operating parameters to a remote device using said Wi-Fi module.

11. The method as set forth in claim 10, wherein said step of wirelessly communicating includes ad hoc networking in which the Wi-Fi module communicates directly with another device within physical range of said trap.

12. The method as set forth in claim 11, further comprising the step of said Wi-Fi module creating a personal web server having an IP address for said ad hoc networking.

13. The method as set forth in claim 10, wherein said Wi-Fi module wirelessly connects directly to a local router-based network, or through a wireless access point, so as to become part of said router-based network, preferably said router-based network including a modem through which said network is connected to the Internet, said method including the step of said trapping device communicating over the Internet to a remote server, and more preferably said step of communicating including said trapping device transmitting information to and receiving information from said remote server through a data proxy server.

14. The method as set forth in claim 13, wherein said method includes said data proxy server caching information transmitted to said data proxy server from said trapping device and only forwarding said information to a remote server in response to said data proxy server receiving a request from said remote server for information from said trapping device.

15. The method as set forth in claim 13, wherein said data proxy server, upon receipt of inquiries from a remote server intended for said trapping device, caches said inquiries and only forwards said inquiries to said trapping device in response to said data proxy server receiving a request from said trapping device for information from said remote server.
